(19) Europäisches Patentamt European Patent Office Office européen des brevets

(11) **EP 4 260 624 B1**

(12) **EUROPEAN PATENT SPECIFICATION**

(45) Date of publication and mention of the grant of the patent:
**25.09.2024 Bulletin 2024/39**

(21) Application number: **20830074.9**

(22) Date of filing: **08.12.2020**

(51) International Patent Classification (IPC):
*H04W 72/00* $^{(2023.01)}$   *H04L 65/612* $^{(2022.01)}$
*H04L 65/80* $^{(2022.01)}$

(52) Cooperative Patent Classification (CPC):
**H04L 65/80; H04L 65/612**

(86) International application number:
**PCT/EP2020/085044**

(87) International publication number:
**WO 2022/122123 (16.06.2022 Gazette 2022/24)**

(54) **METHOD AND APPARATUS FOR USE IN A DATA PULLING OPERATION**

VERFAHREN UND VORRICHTUNG ZUR VERWENDUNG IN EINER DATENZIEHUNGSOPERATION

PROCÉDÉ ET APPAREIL DESTINÉS À ÊTRE UTILISÉS DANS UNE OPÉRATION D'EXTRACTION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.10.2023 Bulletin 2023/42**

(73) Proprietor: **Nokia Technologies Oy**
**02610 Espoo (FI)**

(72) Inventors:
• **PARIS, Stefano**
  **92170 Vanves (FR)**
• **PRIES, Rastin**
  **86163 Augsburg (DE)**

• **CHANDRAMOULI, Devaki**
  **Plano, Texas 75025 (US)**
• **TOSKALA, Antti Anton**
  **02180 Espoo (FI)**
• **SEBIRE, Benoist Pierre**
  **Tokyo, 106--6141 (JP)**

(74) Representative: **Script Intellectual Property LLP**
**Suite J, Anchor House**
**School Close**
**Chandlers Ford**
**Eastleigh, Hampshire SO53 4DY (GB)**

(56) References cited:
**WO-A1-2018/222996      US-A1- 2015 271 700**
**US-A1- 2018 316 740**

EP 4 260 624 B1

**Description**

TECHNICAL FIELD

The present invention relates to a method, an apparatus and a computer program for use in a data pulling operation.

BACKGROUND

A data pulling operation may involve a user equipment pulling data from a content server via a radio access network.

WO2018/222996 A1 describes systems and methods for 360 degree video streaming. A video streaming device is configured to receive a video stream from a network node. It is described that a video streaming device may determine to request a first and second segment of a video stream in advance. The video streaming device may determine a relative priority order for the first and second segment and generate an anticipated requests message. The anticipated requests message may indicate the determined relative priority order of the first and second segment. The anticipated requests message may be sent from a video streaming device to the network node. If a network node receives: a first anticipated requests message from a first video streaming device indicating a first plurality of segments in a first relative priority order; and a second anticipated requests message from a second video streaming device indicating a second plurality of segments in a second relative priority order, the network node may determine that a segment is common and determine a first priority and second priority value for the common segment. The network node may receive the common segment from a server. If the first and second priority values for the common segment are the same, the network node may multicast the common segment to the first and second video streaming devices. If the priority values are different, the network node may unicast the common segment to the first and second video streaming devices.

US2015/0271700A1 describes a chunk-based scheduling method and apparatus which is implemented on the occurrence of congestion in a wireless communication system. A UE in a network receives details of a configured Available Bit Rate (ABR) bearer supporting chunk-based scheduling. A UE receives a metadata file in relation to traffic data being received by the UE as a streaming service from a server. That metadata file is sent to the UE from an eNB and indicates, via control information, an occurrence of congestion in the network. In response, the UE executes an ABR mode for receiving the traffic via chunk-based scheduling. Thereafter, the UE transmits to the eNB, information (for example, a chunk identifier, chunk size, deadline, and the like) for the next chunk to be received next to the currently received chunk to request chunk based scheduling from the eNB. The eNB performs scheduling such that the chunks to be transmitted to a corresponding UE are transmitted to the UE based on the received deadline.

US2018/0316740 A1 describes apparatus and methods relating to deadline signalling for streaming of media data. A processor at a client device executes a real-time application configured to: determine times during which data will be available for download; determine a time at which data is needed to prevent a buffer underrun for the buffer; and when the data is available, to send a request for the data and deadline information representative of the time at which the data is needed to avoid the buffer underrun. Accordingly, a sending device can prioritise delivery of the requested data to prevent client device buffer underrun. According to a described implementation, after receiving deadline information from the client device, an eNB may schedule transmissions between a content server and the client device per the deadline information. That is to say, the content server may receive a request for media data from a client device and send that media data to the client device via an eNB. The eNB may prioritize delivery of the requested media data to the client device according to deadline information previously received from the client device.

SUMMARY

The invention is set out in the appended set of claims.

BRIEF DESCRIPTION OF THE FIGURES

Some examples will now be described in further detail, by way of example only, with reference to the following examples and accompanying drawings, in which:

Figure 1 shows a representation of communication system elements according toan arrangement;
Figure 2 illustrates message exchanges according to an arrangement.;
Figure 3 illustrates message exchanges according to an arrangement;
Figure 4 illustrates message exchanges according to an arrangement;
Figure 5 illustrates operations according to some example embodiments;
Figure 6 illustrates operations according to an arrangement;
Figure 7 illustrates operations according toan arrangement ;
Figure 8 illustrates a downlink protocol stack used in some arrangements;
Figure 9 shows a representation of a control apparatus for an access network according to some example embodiments;
Figure 10 shows a representation of a user equipment apparatus according to an arrangement; and
Figure 11 shows a representation of non-volatile memory media according to an arrangement.

DETAILED DESCRIPTION

The following detailed description focusses, by way of example, on a data pulling operation initiated at a head mounted device (hereafter referred to as HMD-UE) for virtual reality (VR) and/or cross reality (XR) applications, but the technique is equally applicable to data for other types of user equipment and/or for other applications, particularly applications for which the pattern of demand for data is unpredictable, and/or or which a demand for data can be sudden, and for which Time Sensitive Communication Assistance Information (TSCAI) is not best suited to improve scheduling and resource allocation.

The following detailed description focusses, by way of example, on a data pulling operation in a 5G NR communication system, but the techniques are also applicable to data pulling operations in other types of communication system.

VR/XR devices, such as a HMD-UE, generally display only a fraction of the omnidirectional 3D scene (i.e., the 360-degree scene around the observer/user). This portion of the space is called Field of View (FoV) or viewport, and its digital representation needs to be downloaded from media storage (MS). The 3D content is spatially divided into independent subpictures or tiles. The content server MS offers multiple representations of the same tile by storing them at different qualities in terms of resolution, compression, and frame rate. The HMD-UE downloads a representation for each tile and decodes it. The download of new XR/VR content may be triggered by an unpredictable event such as a sudden user movement (e.g. head movement), or a need to download the next portion of the 3D video. Once all tiles in the FoV are downloaded, they can be rendered to generate the 3D representation that is displayed to the user.

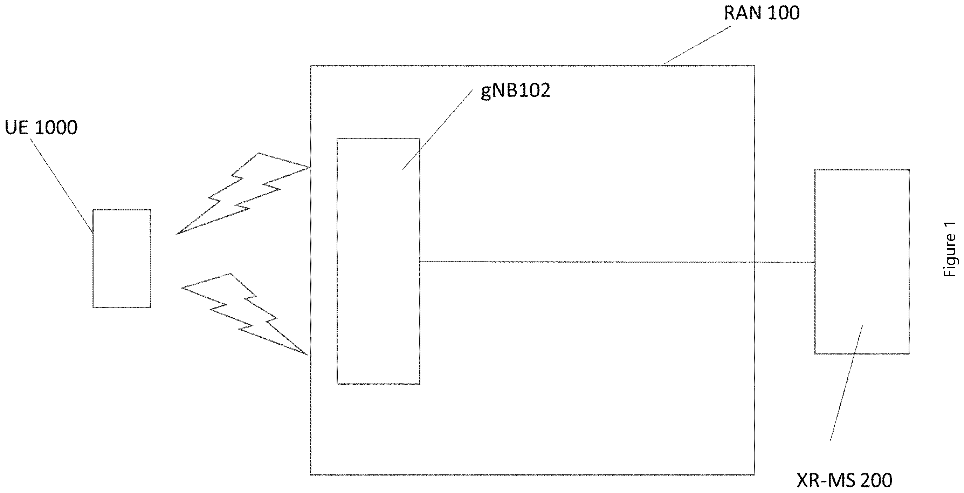

With reference to Figure 1, a HMD-UE 1000 pulls data from VR/XR media storage (MS) 200 via a radio access network 100 and a radio interface between the HMD-UE 1000 and the radio access network 100.

The different tiles that compose the XR/VR content may be downloaded through independent requests and responses at the application layer. We focus here, by way of example, on requests and responses according to a Hypertext Transfer Protocol (HTTP) protocol. The tiles may received at different time instants by the HMD-UE. However, only when all tiles are available, can the rendering module proceed with the rendering of the whole 3D video in the FoV. The time between a request for new XR/VR content (e.g., initiated by detection of a user head movement) and the time the 3D video is displayed to the user is determined by the time of reception at the HMD-UE of the last one of the tiles that compose the new FoV.

The user (wearer of the HMD-UE) perceives the XR/VR streaming as fluid if the process at the HMD-UE of detecting the head movement, receiving the new XR/VR content and rendering the 3D video is completed within a maximum end-to-end (E2E) latency, which may be called Maximum Presentation Latency (MPL).

In some examples, the MPL is in the order of tens to hundreds of milliseconds (ms), and any extra delay can result in video stalls that affect the user Quality of Experience (QoE).

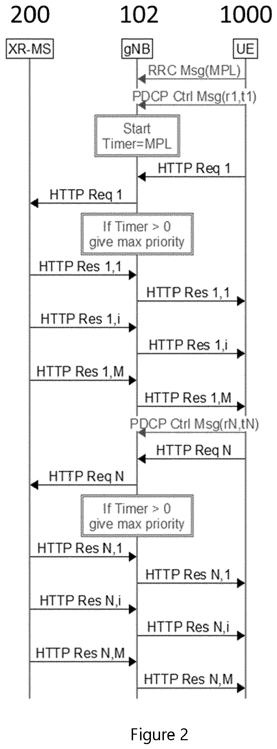

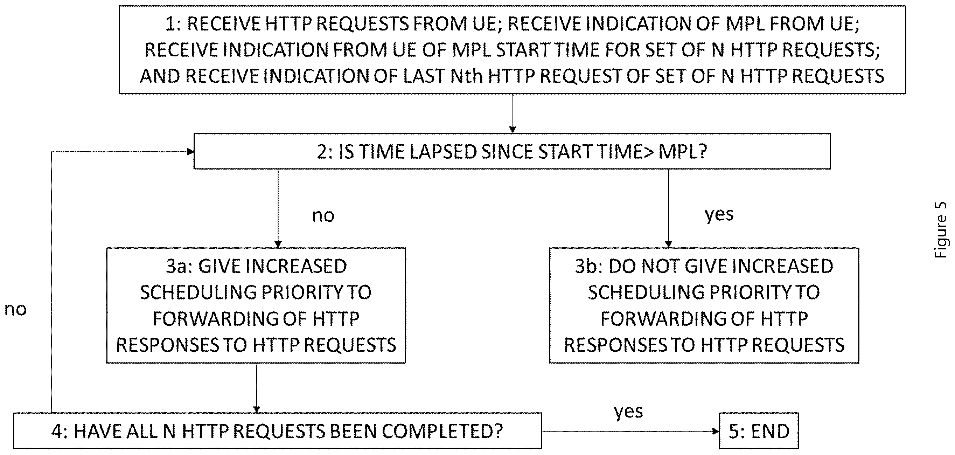

According to arrangements illustrated in Figures 2 and 5, the HMD-UE 1000 transmits application layer requests (e.g. HTTP requests) for MS 200 to send a set of data required for controlling the display output in accordance with a user movement. In addition to the HTTP requests, the HMD-UE 1000 proactively transmits assistance information for the access network 100 so that the access network 100 can allocate/schedule resources in a way that meets the delay requirements of the VR/XR application at the HMD-UE 1000.

Figure 2 illustrates an example of message exchange between the HMD-UE 1000 and a base station (gNB) 102 of a 5G NR access network 100 and between the gNB 102 and the MS 200; and Figure 5 illustrates an example of a set of operations at the gNB 102.

During Radio Resource Control (RRC) Connection Setup for the XR/VR session, the HMD-UE 1000 indicates (STEP 1 of Figure 5) a maximum presentation latency (MPL) for the XR/VR session to the access network 100 using a Layer 3 RRC message. This MPL information is used by the gNB 102 for all subsequent sets of requests of the XR/VR session until any new indication from the HMD-UE 1000 about a change in the MPL.

The gNB 102 uses this information about the MPL to allocate/schedule resources for forwarding HTTP responses to the HMD-UE 1000 from MS 200. In this example, the packets of a XR/VR session can be identified by the access network 100 and the XR/VR session is mapped to a specific Quality of Service (QoS) flow, dedicated radio bearer (DRB) and logical channel.

The HMD-UE 1000 transmits (STEP 1 of Figure 5) a sequence of N HTTP requests for the content server MS 200 to send a set of tiles needed within the MPL time. Immediately before sending the first HTTP request of the sequence of N HTTP requests, the HMD-UE 1000 transmits (STEP 1 of Figure 5) an indication for the gNB 102 of the ID of the HTTP request (r1) and the time when the first HTTP request is generated (t1). For this embodiment and also further embodiments, the ID of the HTTP request may be anything that permits the gNB 102 to bind the HTTP request with the corresponding one or more HTTP responses. For example, the ID may be the Uniform Resource Locator (URL) of the XR/VR content that the request relates to (and which is to be returned in one or more HTTP responses), or the ID may be a function of a combination of header fields (such as e.g. a hash function of static header fields). This assistance information is transmitted using a Medium Access Control (MAC) Control Element (CE) or Packet Data Convergence Protocol (PDCP) Control Packet Data Unit (PDU). Alternatively, this indication may be included in the PDCP Header of the PDU containing the 1st HTTP request (r1) as payload.

After receiving this assistance information, the gNB 102 starts a MPL countdown timer set to expire after a time equal to the MPL. The gNB 102 forwards the HTTP requests to the MS 200, and receives HTTP responses from the MS 200 in reply to the HTTP requests. There may be a plurality M of HTTP responses for each of the N HTTP requests. HTTP Res j,i is the i-th HTTP response for the j-th requested tile; wherein i is a value between 1 and M and j is a value between 1 and N.

As part of the process of forwarding the HTTP responses to the HMD-UE 1000, the gNB checks (STEP 2 of Figure 5) the value of the MPL countdown timer. Provided the MPL countdown timer has not expired (i.e. provided that the MPL countdown timer value > 0), the gNB 102 gives increased scheduling priority to traffic for the XR/VR session to which the MPL relates (including forwarding of the HTTP responses from MS 200 to the HMD-UE 1000) (STEP 3a of Figure 5), at the expense of background traffic, including downlink (DL) traffic to one or more other UEs served by the gNB. Background traffic is buffered if radio resources are not enough for both forwarding the HTTP responses from the MS 200 and the background traffic.

Increasing scheduling priority to the traffic for the XR/VR session to which the MPL relates (including forwarding the HTTP responses to the HMD-UE 1000) involves increasing allocated resources (e.g., priority of the logical channel, prioritized bit rate, capacity, radio resources, etc.).

If it happens that the MPL countdown timer has already expired before all HTTP responses for all N HTTP requests have been forwarded to the HMD-UE 1000, the gNB 102 ceases (STEP 3b of Figure 5) to give maximum priority to XR/VR session to which the MPL relates (including forwarding of HTTP responses for the N HTTP requests related to the MPL countdown timer), on the basis that the delay requirements for the XR/VR application at the HMD-UE 1000 cannot be met anyway for the VR/XR data carried by those HTTP responses. The assistance information provided (STEP 1 of Figure 5) by the HMD-UE 1000 for the gNB 102 also includes an indication of the ID (rN) of the last, Nth HTTP request of the set of N HTTP requests, and the time (tN) at which it was generated. This may be done using a PDCP control PDU or using one or a plurality of reserved bits in the PDCP Header of the PDCP PDU containing the Nth HTTP request as payload. This assistance information enables the gNB 102 to identify the last, Nth HTTP message of the exchange related to the MPL countdown timer. This enables the gNB to determine (STEP 4 of Figure 5) when all HTTP responses relating to the MPL countdown timer have been transmitted to the HMD-UE 1000. This can, for example, help the gNB 102 to process two or more XR/VR sessions proceeding in parallel. The gNB 102 may use the information about the number N of requests relating to the MPL to control the relative priority given to each of two or more XR/VR sessions proceeding in parallel. Depending on the relative progress of each of the parallel sessions, the gNB 102 may prioritize the traffic for one session more than the traffic for another session, based on (a) the respective number of uncompleted requests and (b) the amount of time remaining on the respective MPL timer. For example, with the aim of avoiding missing the MPL for both of two parallel XR/VR sessions, the gNB 102 may give selective priority (e.g. maximum priority) to the traffic for the one of the parallel sessions that currently has the best chance of being completed within the MPL, before (if still within the MPL for the other session) then giving maximum priority to traffic for the other XR/VR session. For example, the gNB 102 may selectively give maximum priority to traffic for the XR/VR session for which the ratio of (i) current MPL Timer value to (ii) the number of outstanding requests (ratio = Timer/(N-Nf), wherein Nf is the number of responses already forwarded to the HMD-UE 1000) is the highest.

In addition, the assistance information <ID, time> related to the first and last (Nth) HTTP requests enables the gNB 102 to keep track of the different elements of the experienced round trip time (RTT), namely the upstream and downstream delays on the radio access network 100 and the upstream and downstream delays on the backhaul. This information about the experienced RTT can be used, for example, to change the scheduling of resources or to inform the HMD 1000 to anticipate the download of new content (or to change the MPL).

In summary, providing assistance information for the gNB 102 by the HMD-UE 1000 according to this first embodiment comprises: indicating the Maximum Presentation Latency (MPL), when the XR/VR session is established (and/or whenever MPL changes); and Radio interface signaling (Layer 2 signalling) indicating when the first and Nth HTTP Requests are transmitted.

The method according to this first embodiment may be considered to be a proactive method, since the gNB 102 schedules traffic to ensure that the MPL is achieved for all tiles of the set of tiles to which the MPL applies, without relying on latency feedback from the HMD-UE 1000. The gNB 102 can allocate/schedule resources to meet the delay requirements of the VR/XR application at the HMD-UE 1000.

According to one example variation of the first embodiment, the HMD-UE 1000 sends a single HTTP request for all tiles of the set of tiles to which the MPL applies. According to this example variation, the HMD-UE 1000 (a) transmits a Layer 2 (L2) message for the gNB 102 (e.g. MAC CE or PDCP Control PDU) indicating when the single HTTP request was generated, and (ii) in response to receiving a tile, transmits a L2 message for the gNB 102 (e.g. MAC CE or a PDCP Control PDU) indicating the number of tiles yet to be received. The gNB 102 keeps track of the tiles that have been delivered and allocates radio resources to the remaining tiles in order to meet the MPL at the HMD-UE 1000.

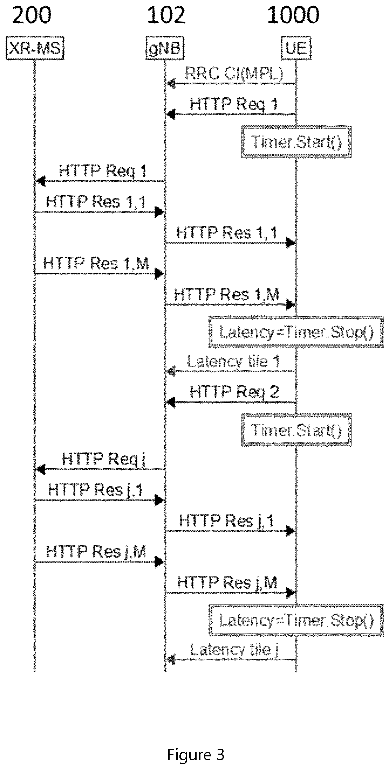

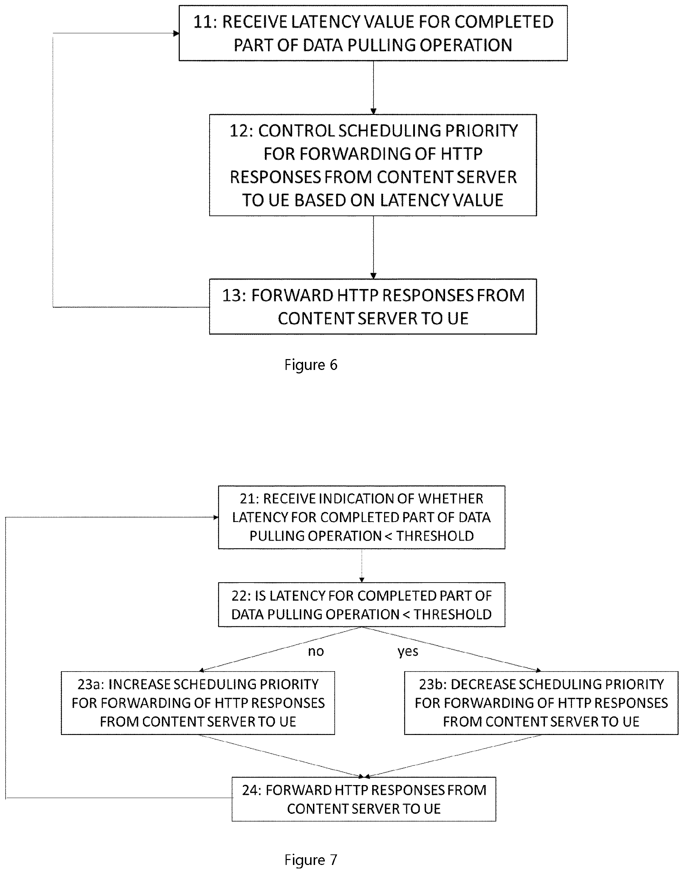

Figure 3 illustrates an example of an exchange of messages between the HMD-UE 1000 and gNB 102 and between the gNB 102 and content server MS 200, according to an arrangement. Figure 6 illustrates an example of operations at the gNB 102 according to that arrangement.

In this arrangement, the HMD-UE 1000 sends assistance information to the network related to the XR/VR service when one or all tiles have been downloaded. As in the first embodiment, the HMD-UE 100 informs the gNB 102 of the MPL for the XR/VR session. The information about the MPL can be sent as new capability information in the last Layer 3 RRC message transmitted by the HMD-UE 1000 during the RRC configuration setup procedure for the XR/VR session.

Whenever new XR/VR content needs to be downloaded (e.g., in response to detecting a head movement at the HMD-UE 1000), the HMD-UE 1000 sends one or more HTTP requests for the content server MS 200 to download N new tiles. The gNB 102 forwards the HTTP request to the MS 200, and the MS 200 sends HTTP responses for the HMD-UE 1000 with the requested tiles embedded therein. A single tile may be in M pieces embedded in respective HTTP responses. For example, a single tile may be a long sequence of images representing a portion of a video stream. The gNB 102 forwards the HTTP responses to the HMD-UE 1000.

In response to receiving all HTTP responses for a tile (e.g. M HTTP responses for M pieces of the tile), the HMD-UE 1000 estimates the download latency for the tile, and transmits (STEP 11 of Figure 6) an indication for gNB 102 of the estimated tile latency. The latency for a tile can be estimated at the HMD-UE 1000 by starting a count-up timer at the HMD-UE when the HTTP request is generated and stopping the count-up timer when the last, Mth HTTP response for the tile is received. The estimated latency information is communicated to the gNB 102 by the HMD-UE 1000 in the form of a MAC CE or PDCP Control PDU. In the case of using a MAC CE, the corresponding Logical Channel (LCH) and/or Dedicated Radio Bearer (DRB) may also be signaled.

Based on the information received at the gNB 102 from the HMD-UE 1000 about the MPL and based on the estimated latency information for a single tile, the gNB 102 controls (STEP 12 of Figure 6) the scheduling priority for traffic for the XR/VR session to which the MPL relates (including the forwarding (STEP 13 of Figure 6) of the HTTP responses to the HMD-UE 1000).

According to one example, radio resources are allocated to the XR/VR service (transmission of HTTP responses from MS) and a fraction $\alpha \in 0;1$ of the background traffic using a round robin scheduling scheme. The remaining $1-\alpha$ fraction of the background traffic is buffered if radio resources are not sufficient. The value of $\alpha$ is incremented by $\beta = 0.1$ up to $\beta = 1$ every time the HMD-UE 1000 indicates that an individual tile latency has met a threshold MPL necessary to download all tiles within the MLP, and multiplied by a factor $\gamma < 1$ (e.g., $\gamma = 0$) every time the HMD-UE 1000 indicates that an individual tile latency has not met the threshold necessary to download all tiles within the MLP. At the beginning the value of $\alpha=1$. More generally, at any time t, the value of $\alpha$ (denoted $\alpha_t$) can be set according to the following rule:

$$\begin{cases} \alpha_t = \alpha_{t-1} + \beta & if\ condition\ is\ satisfied \\ \alpha_t = \gamma \alpha_{t-1} & otherwise \end{cases}$$

The condition can be individual tile latency has met a threshold defined as function of MPL.

The method of this arrangement can be described as a reactive method since the gNB 102 controls scheduling priority in response to receiving latency information for a tile from HMD-UE 1000. Some tiles might experience different service time. For example, the gNB 102 may decide to increase the scheduling priority for later tiles after detecting from the latency information provided by the HMD-UE 1000 that the latency experienced by earlier tiles is too high to guarantee that all tiles of the set to which the MPL applies are received at the HMD-UE 1000 within the MPL.

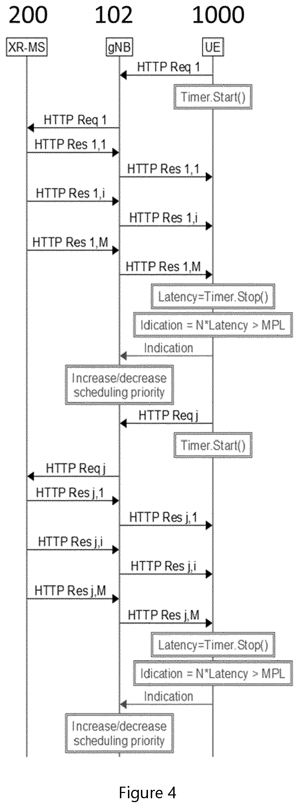

In the arrangement illustrated in Figures 4 and 7, the HMD-UE 1000 indicates (STEP 21 of Figure 7) to the gNB 102 if a certain latency threshold for a tile is met after receiving all the data for the tile. This information from the HMD-UE 1000 indicates to the gNB 102 whether the individual tile latency is sufficiently low to complete the downloading of all tiles to the HMD-UE 1000 within the MPL.

The HMD-UE 1000 may, for example, estimate the latency for the operation of pulling one tile from the MS 200 by starting a count-up timer when sending the HTTP request for the tile, and stopping the count-up timer upon reception at the HMD-UE 1000 of the last HTTP response for the requested tile. The HMD-UE 1000 estimates the overall download time (time for pulling all tiles from the MS 200, to thereby complete the data pulling operation) by multiplying the latency measured for one tile (value of the count-up timer when it was stopped) by the number of tiles N. If the estimated overall download time is not greater than the MPL, the HMD-UE transmits a positive indication for the gNB 102. If the estimated overall download time is greater than the MPL, the HMD-UE 1000 transmits a negative indication for the gNB 102.

The gNB 2 controls the scheduling priority given to traffic for the XR/VR session to which the MPL relates (including forwarding HTTP responses from the MS 200) according to these indications. The gNB determines whether the individual tile latency indication from the HMD-UE 102 is a positive or a negative indication (STEP 22 of Figure 7). If the indication is negative, the gNB 102 increases (STEP 23a of Figure 7) the scheduling priority for traffic for the XR/VR session (including forwarding (STEP 24 of Figure 7) HTTP responses from the MS 200). On the other hand, if the indication is positive, the gNB 102 decreases (STEP 23b of Figure 7) the scheduling priority for traffic for the XR/VR session (including forwarding (STEP 24 of Figure 7) HTTP responses from the MS 200).

For some arrangements, the HMD-UE 1000 may report a latency or latency threshold indication for each individual tile, or the HMD-UE 1000 may only do so for tiles for which the measured individual tile latency is measured to be higher than is necessary to download all tiles (to thereby complete the data pulling operation) within the MPL. This latter option avoids reporting small fluctuations frequently. For example, the HMD-UE 1000 may indicate to the gNB 100 in a single Layer 2 message a plurality of tiles for which the individual tile latency is measured to be higher than is necessary to download all tiles within the MPL. The message may include the IDs for the plurality of tiles).

According to one variation of an arrangement, the HMD-UE 1000 instead transmits for the gNB 102 an indication of the variation of the latency. For example, the variation indicated to the gNB 102 may be e.g. an indication of whether the individual tile latency of the tile most recently received at the HMD-UE 1000 was higher or lower than the individual tile latency of the immediately preceding tile. Alternatively, the variation indicated to the gNB 102 may be a standard deviation value. This indication for the gNB 102 may also be in the form of a MAC CE or PDCP Control PDU. In the case of using MAC CE, the corresponding LCH and/or DRB may also be signalled. The gNB 102 determines whether the scheduling priority (thereby the allocated resources) for traffic for the XR/VR session (including forwarding HTTP responses from the MS 200) should be increased or decreased, according

to whether the indication from the HMD-UE 1000 indicates an increase or decrease in the individual tile latency for the most recently received tile.

The methods of some arrangements are equally applicable regardless of whether a single HTTP request is used for all tiles of the set of tiles, or a sequence of HTTP requests is used for respective tiles of the set of tiles.

In summary, the assistance information provided by the HMD-UE 1000 to the gNB 102 in some arrangements includes: an indication, when the XR/VR session is established (and/or when MPL changes), of the MPL; and an indication of the delay between the HTTP request for a tile and the last HTTP response for the tile, or an indication whether such delay is lower than a threshold calculated to be necessary to download all tiles within the MPL.

The methods of some arrangements may both be considered as reactive methods, because the gNB 102 adapts the scheduling priority for traffic for the XR/VR session (including forwarding HTTP responses from the MS 200) in response to indications from the HMD-UE 1000 of individual tile latency information, to ensure that the MPL is achieved for the whole set of tiles.

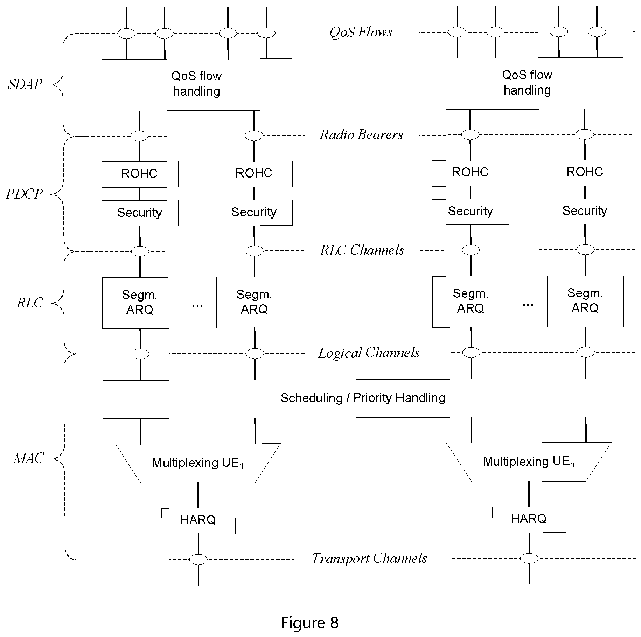

Figure 8 shows the 3GPP NR user plane protocol stack. The Service Data Adaptation Protocol (SDAP defined in TS 37.324) is responsible for: mapping of QoS Flow to DRBs. (SDAP marks QoS Flow ID in the packet header as well as QoS which applies to the packet); and the determination of which packets are available at the radio buffers for scheduling as well as configuration of QoS parameters visible to the MAC scheduler.

SDAP determines queue management by enforcing QoS/QoE policies including traffic shaping of lower priority traffic. This allows faster delivery to lower layers of high priority traffic from applications with higher demand (QoS/QoE management).

The QoS Flow is the finest granularity to differentiate traffic forwarding treatment (e.g. scheduling).

QoS Flow may be Guaranteed Bit Rate (GBR) QoS Flow or Non-GBR QoS Flow .

The QoS flow is identified by QoS Flow ID (QFI), dynamically assigned or may be equal to the 5G QoS Identifier (5QI). The QoS flow supports reflective QoS.

A QoS Flow is characterized by a QoS profile including: 5G QoS Identifier (5QI); and Allocation and Retention Priority (ARP); plus 5G QoS characteristics associated with each 5QI scalar: Resource Type (GBR, delay critical GBR or Non-GBR); Priority level; Packet Delay Budget; Packet Error Rate; Averaging window. Maximum Data Burst Volume (for 5QIs with 5G Access Network PDB <=20ms). For GBR QoS Flow, the QoS profile may also include: Guaranteed/Max. Flow Bit Rate (GFBR/MFBR) UL/DL; Notification control; and Maximum Packet Loss Rate UL/DL. For non-GBR QoS Flow: the QoS profile may include a Reflective QoS Attribute (RQA).

The QoS Flow is also characterized by one or more QoS rule(s).

In the techniques described above, the assistance information provided by the HMD-UE 1000 for the gNB 102 enhances the QoS/QoE mapping of VR/XR traffic at gNB 102.

The above-described arrangements can improve scheduling and resource allocation algorithms at the gNB 102 to better prevent stalls and quality loss of XR/VR streams by improving the round-trip-time (RTT) and allocated capacity.

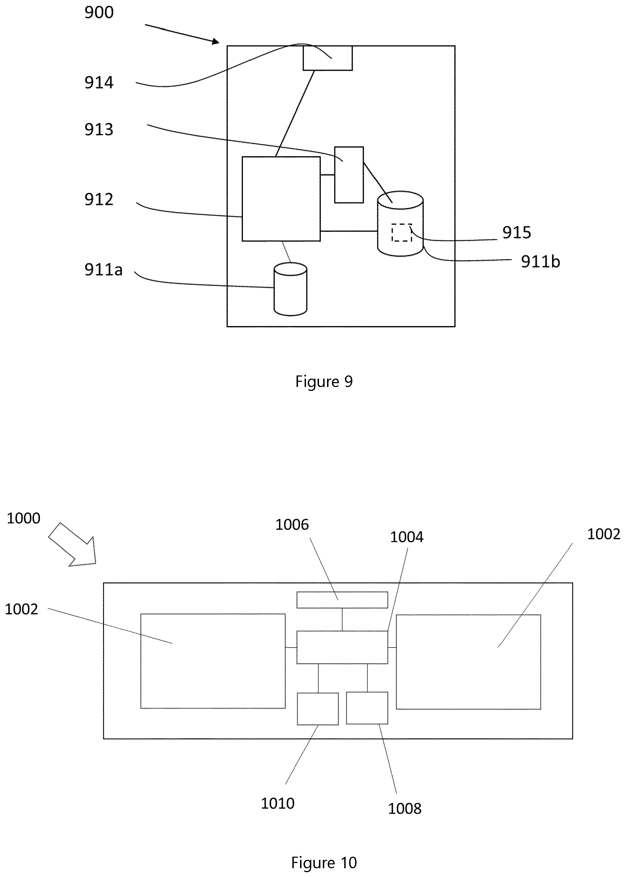

Figure 9 illustrates an example of a control apparatus 900 for use at the gNB 102. The control apparatus 900 may comprise at least one random access memory (RAM) 911a, at least one read only memory (ROM) 911b, at least one processor 912, 913 and an input/output interface 914. The at least one processor 912, 913 may be coupled to the RAM 911a and the ROM 911b. The at least one processor 912, 913 may be configured to execute an appropriate software code 915. The software code 915 may for example allow to perform one or more steps to perform one or more of the operations described above The software code 915 may be stored in the ROM 911b. The control apparatus 900 is interconnected to one or more antenna units (not shown) for making and receiving radio transmissions to the HMD-UE 1000, and interconnected to the content server MS 200 outside the access network 100. The interconnection with the content server 200 may be via one or more other entities (not shown) of the access network 100.

Figure 10 illustrates an example of a user equipment 1000, such as HMD-UE 1000 described previously. The user equipment 1000 may be provided by any device capable of sending and receiving radio signals. In the example described above, the user equipment is a head mounted device (HMD), but the user equipment may be other types of device. Non-limiting examples comprise a hand-held mobile phone or smart phone, a computer provided with a wireless interface card or other wireless interface facility (e.g., USB dongle), a personal data assistant (PDA) or a tablet provided with wireless communication capabilities. The HMD-UE 1000 may receive signals over an air or radio interface via appropriate apparatus for receiving and may transmit signals via appropriate apparatus for transmitting radio signals.

The HMD-UE 1000 may be provided with at least one processor 1004, at least one memory 1008 (e.g. ROM and/or RAM) and other possible components for use in software and hardware aided execution of tasks it is designed to perform, including control of access to and communications with access systems and other communication devices. The at least one processor 1004 is coupled to memory 1008. The at least one processor 1004 may be configured to execute an appropriate software code stored at the memory 1008. The software code 1008 may for example allow to perform one or more of the operations described above. Example functions of the at least one processor 1004 include: controlling the making of radio transmissions via antenna unit 1006 (such as the HTTP requests and Layer 2/3 messages mentioned earlier) in response to e.g. input signals from the motion detection unit 1010; and controlling the output of the display unit 1002 based on the input signals from the motion detection unit 1010 and XR/VR data received from the content server 200.

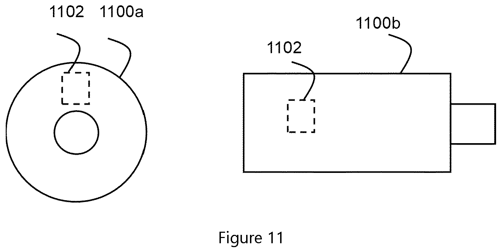

Figure 11 shows a schematic representation of non-volatile memory media 1100a (e.g. computer disc (CD) or digital versatile disc (DVD)) and 1100b (e.g. universal serial bus (USB) memory stick) storing instructions and/or parameters 1102 which when executed by a processor allow the processor to perform one or more of the steps of the methods described previously.

It is to be noted that embodiments of the present invention may be implemented as circuitry, in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer or smart phone, or user equipment.

As used in this application, the term "circuitry" refers to all of the following: (a) hardware- only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

The described features, advantages, and characteristics of the invention can be combined insofar encompassed by the scope of the invention as defined by the appended claims. One skilled in the relevant art will recognize that the invention can be practiced without one or more of the specific features or advantages of a particular embodiment as long as it comprises at least every feature of any of the appended independent claims.

In other instances, additional features and advantages can be recognized in certain embodiments that may not be present in all embodiments of the invention, as long as any of said embodiments comprises at least every feature of any of the appended independent claims.

**Claims**

1. A method, comprising:

receiving at an access network (100) one or more requests of a data pulling operation initiated at a user equipment (1000) to pull a data set from a content server (200); wherein the one or more requests comprise a sequence of requests for respective parts of the data set;

forwarding the one or more requests from the user equipment (1000) to the content server (200);

transmitting for the user equipment (1000) from the access network (100) a plurality of responses for the sequence of requests for respective parts of the data set from the content server (200); and

before transmitting all responses for the data pulling operation to the user equipment (1000), receiving assistance information from the user equipment;

wherein the assistance information comprises:

an indication of a maximum useful length of time to assist the access network in managing traffic through the access network such that the data pulling operation is completed within the maximum useful length of time;

an indication to identify the start time of the data pulling operation; and

an indication of an identifier of the first and last requests of the sequence of requests;

wherein the method further comprises:

increasing the priority assigned to traffic related to the data pulling operation by increasing the priority assigned to forwarding responses from the content server until the earliest of:

(a) lapse of the maximum useful length of time since the start time; and

(b) the transmission of responses for all of the sequence of requests of the data pulling operation.

2. A method according to claim 1, wherein increasing the priority assigned to forwarding responses comprises increasing resources allocated to forwarding responses.

3. The method according to any preceding claim, wherein the assistance information indicates to the access network the progress of the data pulling operation, and wherein the method comprises using the assistance information to control the priority assigned to traffic related to the data pulling operation relative to traffic related to another, parallel data pulling operation.

4. The method according to any preceding claim, wherein receiving one or more requests comprises receiving a single request identifying a plurality of parts of the data set; wherein the assistance information comprises indications of the number of unreceived parts of the data set; and wherein the method comprises increasing the priority assigned to forwarding responses from the content server until the earliest of (i) lapse of the maximum useful length of time since the start time or (ii) receipt of an indication that no parts are unreceived at the user equipment.

5. The method according to claim 1, wherein the assistance information indicates a measurement of time required to complete a completed part of the data pulling operation; and further comprising controlling the priority given to forwarding one or more subsequent responses from the content server based on the measurement.

6. The method according to claim 5, wherein receiving the one or more requests comprises receiving a sequence of requests for respective parts of the data set; and wherein the assistance information indicates a measured latency value for a completed request.

7. The method according to claim 1, wherein the assistance information comprises information for the access network indicating whether one or more conditions for the data pulling operation has been met; wherein the one or more conditions comprise at least a condition that the time required to complete a completed part of the data pulling operation was less than a predetermined threshold value; and wherein the method comprises controlling the priority given to traffic related to the data pulling operation based on the information.

8. The method according to claim 7, comprising controlling the priority given to forwarding one or more subsequent responses from the content server based on the information.

9. The method according to claim 7, wherein receiving the one or more requests comprises receiving a sequence of requests for respective parts of the data set; and wherein the assistance information comprises information for the access network indicating whether one more conditions for a completed request has been met; wherein the one or more conditions comprise at least the condition that the latency for a request was less than a predetermined threshold value.

10. Apparatus (102), comprising:

means for receiving at an access network (100) one or more requests of a data pulling operation initiated at a user equipment (1000) to pull a data set from a content server (200); wherein the one or more requests comprise a sequence of requests for respective parts of the data set;

means for forwarding the one or more requests from the user equipment (1000) to the content server (200);

means for transmitting for the user equipment (1000) from the access network (100) a plurality of responses for the sequence of requests for respective parts of the data set from the content server (200); and

means, for, before transmitting all responses for the data pulling operation to the user equipment (1000), receiving assistance information from the user equipment;
wherein the assistance information comprises:

an indication of a maximum useful length of time to assist the access network (100) in managing traffic through the access network such that the data pulling operation is completed within the maximum useful length of time;
an indication to identify the start time of the data pulling operation; and
an indication of an identifier of the first and last requests of the sequence of requests;

wherein the apparatus further comprises:
means to increase the priority assigned to traffic related to the data pulling operation by increasing the priority assigned to forwarding responses from the content server until the earliest of:

(a) lapse of the maximum useful length of time since the start time; and
(b) the transmission of responses for all of the sequence of requests of the data pulling operation.

11. The apparatus according to claim 10, wherein the assistance information indicates to the access network the progress of the data pulling operation, and wherein the apparatus comprises means configured to use the assistance information to control the priority assigned to traffic related to the data pulling operation relative to traffic related to another, parallel data pulling operation..

12. The apparatus according to claim 10 or claim 11, wherein receiving one or more requests comprises receiving a single request identifying a plurality of parts of the data set; wherein the assistance information comprises indications of the number of unreceived parts of the data set; and wherein the apparatus comprises means configured to cause the apparatus to increase the priority assigned to forwarding responses from the content server until the earliest of (i) lapse of the maximum useful length of time since the start time or (ii) receipt of an indication that no parts are unreceived at the user equipment.

13. The apparatus according to claim 10, wherein the assistance information indicates a measurement of time required to complete a completed part of the data pulling operation; and wherein the apparatus comprises means configured to control the priority given to forwarding one or more subsequent responses from the content server based on the measurement.

14. The apparatus according to claim 13, wherein receiving the one or more requests comprises receiving a sequence of requests for respective parts of the data set; and wherein the assistance information indicates a measured latency value for a completed request.

15. A computer program comprising computer executable code which when run on at least one processor is configured to cause an apparatus at least to: perform the method of any one of claims 1 to 9.

**Patentansprüche**

1. Verfahren, das Folgendes umfasst:

Empfangen von einer oder mehreren Anforderungen einer Datenziehungsoperation, die an einer Teilnehmereinrichtung (1000) initiiert wird, an einem Zugangsnetzwerk (100), um einen Datensatz von einem Inhaltsserver (200) zu ziehen; wobei die eine oder die mehreren Anforderungen eine Folge von Anforderungen jeweiliger Teile des Datensatzes umfassen;
Weiterleiten der einen oder der mehreren Anforderungen von der Teilnehmereinrichtung (1000) zum Inhaltsserver (200);
Übertragen einer Vielzahl von Antworten auf die Folge von Anforderungen jeweiliger Teile des Datensatzes vom Inhaltsserver (200) für die Teilnehmereinrichtung (1000) vom Zugangsnetzwerk (100) und
vor dem Übertragen von allen Antworten auf die Datenziehungsoperation zur Teilnehmereinrichtung (1000) Empfangen von Unterstützungsinformationen von der Teilnehmereinrichtung;
wobei die Unterstützungsinformationen Folgendes umfassen:

eine Anzeige einer maximalen nutzbaren Zeitlänge, um das Zugangsnetzwerk beim Verwalten von Verkehr durch das Zugangsnetzwerk zu unterstützen, derart, dass die Datenziehungsoperation innerhalb der maximalen nutzbaren Zeitlänge abgeschlossen wird;
eine Anzeige zum Identifizieren der Startzeit der Datenziehungsoperation und
eine Anzeige einer Kennung der ersten und der letzten Anforderung der Folge von Anforderungen;
wobei das Verfahren ferner Folgendes umfasst:
Erhöhen der Priorität, die dem Verkehr zugewiesen ist, der sich auf die Datenziehungsoperation bezieht, durch Erhöhen der Priorität, die dem Weiterleiten von Antworten vom Inhaltsserver zugewiesen ist, bis zum frühesten von Folgendem:

(a) Vergehen der maximalen nutzbaren Zeitlänge seit der Startzeit und
(b) Übertragung von Antworten auf alle der Folge von Anforderungen der Datenziehungsoperation.

2. Verfahren nach Anspruch 1, wobei das Erhöhen der Priorität, die dem Weiterleiten von Antworten zugewiesen ist, das Erhöhen von Ressourcen, die dem Weiterleiten von Antworten zugeteilt sind, umfasst.

3. Verfahren nach einem der vorhergehenden Ansprüche, wobei die Unterstützungsinformationen dem Zugangsnetzwerk den Fortschritt der Datenziehungsoperation anzeigen und wobei das Verfahren das Verwenden der Unterstützungsinformationen zum Steuern der Priorität, die dem Verkehr zugewiesen ist, der sich auf die Datenziehungsoperation bezieht, relativ zu Verkehr, der sich auf eine andere, parallele Datenziehungsoperation bezieht, umfasst.

4. Verfahren nach einem der vorhergehenden Ansprüche, wobei das Empfangen von einer oder mehreren Anforderungen das Empfangen einer einzelnen Anforderung umfasst, die eine Vielzahl von Teilen des Datensatzes identifiziert; wobei die Unterstützungsinformationen Anzeigen der Anzahl von nicht empfangenen Teilen des Datensatzes umfassen und wobei das Verfahren das Erhöhen der Priorität umfasst, die dem Weiterleiten von Antworten vom Inhaltsserver bis zum frühesten vom (i) Vergehen der maximalen nutzbaren Zeitlänge seit der Startzeit oder (ii) Empfang einer Anzeige, dass keine Teile an der Teilnehmereinrichtung nicht empfangen wurden.

5. Verfahren nach Anspruch 1, wobei die Unterstützungsinformationen eine Messung von Zeit anzeigen, die erforderlich ist, um einen abgeschlossenen Teil der Datenziehungsoperation abzuschließen; und das ferner das Steuern der Priorität umfasst, die dem Weiterleiten von einer oder mehreren nachfolgenden Antworten vom Inhaltsserver auf Basis der Messung gegeben ist.

6. Verfahren nach Anspruch 5, wobei das Empfangen der einen oder der mehreren Anforderungen das Empfangen einer Folge von Anforderungen von jeweiligen Teilen des Datensatzes umfasst und wobei die Unterstützungsinformationen einen gemessenen Latenzwert für eine abgeschlossene Anforderung anzeigen.

7. Verfahren nach Anspruch 1, wobei die Unterstützungsinformationen Informationen für das Zugangsnetzwerk umfassen, die anzeigen, ob eine oder mehrere Bedingungen für die Datenziehungsoperation erfüllt wurde; wobei die eine oder die mehreren Bedingungen mindestens eine Bedingung umfasst, dass die erforderliche Zeit zum Abschließen eines abgeschlossenen Teils der Datenziehungsoperation kürzer war als ein vorbestimmter Schwellwert; und wobei das Verfahren das Steuern der Priorität, die einem Verkehr gegeben wurde, der sich auf die Datenziehungsoperation bezieht, auf Basis der Informationen umfasst.

8. Verfahren nach Anspruch 7, das das Steuern der Priorität, die dem Weiterleiten von einer oder mehreren nachfolgenden Antworten vom Inhaltsserver gegeben wurde, auf Basis der Informationen umfasst.

9. Verfahren nach Anspruch 7, wobei das Empfangen der einen oder der mehreren Anforderungen das Empfangen einer Folge von Anforderungen von jeweiligen Teilen des Datensatzes umfasst und wobei die Unterstützungsinformationen Informationen für das Zugangsnetzwerk umfassen, die anzeigen, ob eine oder mehrere Bedingungen für eine abgeschlossene Anforderung erfüllt wurde; wobei die eine oder die mehreren Bedingungen mindestens die Bedingung umfasst, dass die Latenz für eine Anforderung kleiner war als ein vorbestimmter Schwellwert.

10. Vorrichtung (102), die Folgendes umfasst:

Mittel zum Empfangen von einer oder mehreren Anforderungen einer Datenziehungsoperation, die an einer Teilnehmereinrichtung (1000) initiiert wird, an einem Zugangsnetzwerk (100), um einen Datensatz von einem Inhaltsserver (200) zu ziehen; wobei die eine oder die mehreren Anforderungen eine Folge von Anforderungen jeweiliger Teile des Datensatzes umfassen;
Mittel zum Weiterleiten der einen oder der mehreren Anforderungen von der Teilnehmereinrichtung (1000) zum Inhaltsserver (200);
Mittel zum Übertragen einer Vielzahl von Antworten auf die Folge von Anforderungen jeweiliger Teile des Datensatzes vom Inhaltsserver (200) für die Teilnehmereinrichtung (1000) vom Zugangsnetzwerk (100) und
vor dem Übertragen von allen Antworten auf die Datenziehungsoperation zur Teilnehmereinrichtung (1000) Mittel zum Empfangen von Unterstützungsinformationen von der Teilnehmereinrichtung;
wobei die Unterstützungsinformationen Folgendes umfassen:

eine Anzeige einer maximalen nutzbaren Zeitlänge, um das Zugangsnetzwerk (100) beim Verwalten von Verkehr durch das Zugangsnetzwerk zu unterstützen, derart, dass die Datenziehungsoperation innerhalb der maximalen nutzbaren Zeitlänge abgeschlossen wird; eine Anzeige zum Identifizieren der Startzeit der Datenziehungsoperation und eine Anzeige einer Kennung der ersten und der letzten Anforderung der Folge von Anforderungen; wobei die Vorrichtung ferner Folgendes umfasst:

Mittel zum Erhöhen der Priorität, die dem Verkehr zugewiesen ist, der sich auf die Datenziehungsoperation bezieht, durch Erhöhen der Priorität, die dem Weiterleiten von Antworten vom Inhaltsserver zugewiesen ist, bis zum frühesten von Folgendem:

(a) Vergehen der maximalen nutzbaren Zeitlänge seit der Startzeit und
(b) Übertragung von Antworten auf alle der Folge von Anforderungen der Datenziehungsoperation.

11. Vorrichtung nach Anspruch 10, wobei die Unterstützungsinformationen dem Zugangsnetzwerk den Fortschritt der Datenziehungsoperation anzeigen und wobei die Vorrichtung Mittel zum Verwenden der Unterstützungsinformationen zum Steuern der Priorität umfasst, die dem Verkehr zugewiesen ist, der sich auf die Datenziehungsoperation bezieht, relativ zu Verkehr, der sich auf eine andere, parallele Datenziehungsoperation bezieht.

12. Vorrichtung nach Anspruch 10 oder Anspruch 11, wobei das Empfangen von einer oder mehreren Anforderungen das Empfangen einer einzelnen Anforderung umfasst, die eine Vielzahl von Teilen des Datensatzes identifiziert; wobei die Unterstützungsinformationen Anzeigen der Anzahl von nicht empfangenen Teilen des Datensatzes umfassen und wobei die Vorrichtung Mittel umfasst, die dazu ausgelegt sind, die Vorrichtung zu veranlassen, die Priorität zu erhöhen, die dem Weiterleiten von Antworten vom Inhaltsserver bis zum frühesten vom (i) Vergehen der maximalen nutzbaren Zeitlänge seit der Startzeit oder (ii) Empfang einer Anzeige, dass keine Teile an der Teilnehmereinrichtung nicht empfangen wurden, zugewiesen wurde.

13. Vorrichtung nach Anspruch 10, wobei die Unterstützungsinformationen eine Messung von Zeit anzeigen, die erforderlich ist, um einen abgeschlossenen Teil der Datenziehungsoperation abzuschließen; und wobei die Vorrichtung ferner Mittel umfasst, die dazu ausgelegt sind, die Priorität, die dem Weiterleiten von einer oder mehreren nachfolgenden Antworten vom Inhaltsserver gegeben wurde, auf Basis der Messung zu steuern.

14. Vorrichtung nach Anspruch 13, wobei das Empfangen der einen oder der mehreren Anforderungen das Empfangen einer Folge von Anforderungen von jeweiligen Teilen des Datensatzes umfasst und wobei die Unterstützungsinformationen einen gemessenen Latenzwert für eine abgeschlossene Anforderung anzeigen.

15. Computerprogramm, das einen computerausführbaren Code umfasst, der, wenn er auf mindestens einem Prozessor läuft, dazu ausgelegt ist, die Vorrichtung mindestens zu Folgendem zu veranlassen: Durchführen des Verfahrens nach einem der Ansprüche 1 bis 9.

**Revendications**

1. Procédé, comprenant :

sur un réseau d'accès (100), la réception d'une ou plusieurs demandes d'une opération d'extraction de données initiée au niveau d'un équipement utilisateur (1000) pour extraire un jeu de données d'un serveur de contenu (200) ; dans lequel les une ou plusieurs demandes comprennent une séquence de demandes de parties respectives du jeu de données ; le transfert des une ou plusieurs demandes de l'équipement utilisateur (1000) au serveur de contenu (200) ; la transmission, à l'équipement utilisateur (1000) de la part du réseau d'accès (100), d'une pluralité de réponses pour la séquence de demandes de parties respectives du jeu de données provenant du serveur de contenu (200) ; et avant de transmettre toutes les réponses pour l'opération d'extraction de données à l'équipement utilisateur (1000), la réception d'informations d'assistance de la part de l'équipement utilisateur ; dans lequel les informations d'assistance comprennent :

une indication d'une durée utile maximale pour aider le réseau d'accès à gérer le trafic à travers le réseau d'accès, de sorte que l'opération d'extraction de données soit terminée dans la durée utile maximale ; une indication pour identifier l'heure de début de l'opération d'extraction de données ; et une indication d'un identifiant de la première et de la dernière demande de la séquence de demandes ;

dans lequel le procédé comprend en outre : l'augmentation de la priorité attribuée au trafic lié à l'opération d'extraction de données en augmentant la priorité attribuée aux réponses de transfert à partir du serveur de contenu jusqu'au premier des cas suivants :

(a) écoulement de la durée utile maximale depuis l'heure de début ; et
(b) la transmission des réponses pour les demandes de la séquence de demandes de l'opération d'extraction de données.

2. Procédé selon la revendication 1, dans lequel l'augmentation de la priorité attribuée aux réponses de transfert comprend l'augmentation de ressources allouées aux réponses de transfert.

3. Procédé selon l'une des revendications précédentes, dans lequel les informations d'assistance indiquent au réseau d'accès la progression de l'opération d'extraction de données, et dans lequel le procédé comprend l'utilisation des informations d'assistance pour contrôler la priorité attribuée au trafic lié à l'opération d'extraction de données par rapport au trafic lié à une autre opération d'extraction de données parallèle.

4. Procédé selon l'une des revendications précédentes, dans lequel la réception d'une ou plusieurs demandes comprend la réception d'une demande unique identifiant une pluralité de parties du jeu de données ; dans lequel les informations d'assistance comprennent des indications du nombre de parties non reçues du jeu de données ; et dans lequel le procédé comprend l'augmentation de la priorité attribuée aux réponses de transfert à partir du serveur de contenu jusqu'au premier des cas suivants (i) écoulement de la durée utile maximale depuis l'heure de début ou (ii) la réception d'une indication selon laquelle aucune partie n'est reçue sur l'équipement utilisateur.

5. Procédé selon la revendication 1, dans lequel les informations d'assistance indiquent une mesure du temps nécessaire pour terminer une partie complète de l'opération d'extraction de données ; et comprenant en outre le contrôle de la priorité accordée au transfert d'une ou plusieurs réponses ultérieures à partir du serveur de contenu sur la base de la mesure.

6. Procédé selon la revendication 5, dans lequel la réception des une ou plusieurs demandes comprend la réception d'une séquence de demandes de parties respectives du jeu de données ; et dans lequel les informations d'assistance indiquent une valeur de latence mesurée pour une demande terminée.

7. Procédé selon la revendication 1, dans lequel les informations d'assistance comprennent des informations pour le réseau d'accès indiquant si une ou plusieurs conditions pour l'opération d'extraction de données ont été remplies ; dans lequel les une ou plusieurs conditions comprennent au moins une condition selon laquelle le temps nécessaire pour terminer une partie complète de l'opération d'extraction de données était inférieur à une valeur seuil prédéterminée ; et dans lequel le procédé comprend le contrôle de la priorité accordée au trafic lié à l'opération d'extraction de données sur la base des informations.

8. Procédé selon la revendication 7, comprenant le contrôle de la priorité accordée au transfert d'une ou plusieurs réponses ultérieures à partir du serveur de contenu sur la base des informations.

9. Procédé selon la revendication 7, dans lequel la réception des une ou plusieurs demandes comprend la réception d'une séquence de demandes de parties respectives du jeu de données ; et dans lequel les informations d'assistance comprennent des informations pour le réseau d'accès indiquant si une ou plusieurs conditions pour une demande complète ont été remplies ; dans lequel les une ou plusieurs conditions comprennent au moins la condition selon laquelle la latence pour une demande était inférieure à une valeur seuil prédéterminée.

10. Appareil (102), comprenant :

des moyens pour recevoir sur un réseau d'accès (100) une ou plusieurs demandes d'une opération d'extraction de données initiée au niveau d'un équipement utilisateur (1000) pour extraire un jeu de données d'un serveur de contenu (200) ; dans lequel les une ou plusieurs demandes comprennent une séquence de demandes de parties respectives du jeu de données ;
des moyens pour transférer les une ou plusieurs demandes de l'équipement utilisateur (1000) au serveur de contenu (200) ;
des moyens pour transmettre, à l'équipement utilisateur (1000) de la part du réseau d'accès (100), une pluralité de réponses pour la séquence de demandes de parties respectives du jeu de données provenant du serveur de contenu (200) ; et
des moyens pour, avant de transmettre toutes les réponses pour l'opération d'extraction de données à l'équipement utilisateur (1000), recevoir des informations d'assistance de la part de l'équipement utilisateur ;
dans lequel les informations d'assistance comprennent :

  une indication d'une durée utile maximale pour aider le réseau d'accès (100) à gérer le trafic à travers le réseau d'accès de sorte que l'opération d'extraction de données soit terminée dans la durée utile maximale ;

  une indication pour identifier l'heure de début de l'opération d'extraction de données ; et

  une indication d'un identifiant de la première et de la dernière demande de la séquence de demandes ;

  dans lequel l'appareil comprend en outre :

  des moyens pour augmenter la priorité attribuée au trafic lié à l'opération d'extraction de données en augmentant la priorité attribuée aux réponses de transfert à partir du serveur de contenu jusqu'au premier des cas suivants :

    (a) écoulement de la durée utile maximale depuis l'heure de début ; et

    (b) la transmission des réponses pour les demandes de la séquence de demandes de l'opération d'extraction de données.

11. Appareil selon la revendication 10, dans lequel les informations d'assistance indiquent au réseau d'accès la progression de l'opération d'extraction de données, et dans lequel l'appareil comprend des moyens configurés pour utiliser les informations d'assistance pour contrôler la priorité attribuée au trafic lié à l'opération d'extraction de données par rapport au trafic lié à une autre opération d'extraction de données parallèle.

12. Appareil selon la revendication 10 ou la revendication 11, dans lequel la réception d'une ou plusieurs demandes comprend la réception d'une demande unique identifiant une pluralité de parties du jeu de données ; dans lequel les informations d'assistance comprennent des indications du nombre de parties non reçues du jeu de données ; et dans lequel l'appareil comprend des moyens configurés pour amener l'appareil à augmenter la priorité attribuée aux réponses de transfert à partir du serveur de contenu jusqu'au premier des cas suivants (i) écoulement de la durée utile maximale depuis l'heure de début ou (ii) la réception d'une indication selon laquelle aucune partie n'est reçue sur l'équipement utilisateur.

13. Appareil selon la revendication 10, dans lequel les informations d'assistance indiquent une mesure du temps nécessaire pour terminer une partie complète de l'opération d'extraction de données ; et dans lequel l'appareil comprend des moyens configurés pour contrôler la priorité accordée au transfert d'une ou plusieurs réponses ultérieures à partir du serveur de contenu sur la base de la mesure.

14. Appareil selon la revendication 13, dans lequel la réception des une ou plusieurs demandes comprend la réception d'une séquence de demandes de parties respectives du jeu de données ; et dans lequel les informations d'assistance indiquent une valeur de latence mesurée pour une demande terminée.

15. Programme informatique comprenant un code exécutable par ordinateur qui, lorsqu'il est exécuté sur au moins un processeur, est configuré pour amener un appareil à au moins : réaliser le procédé de l'une des revendications 1 à 9.

Figure 1

Figure 2

Figure 3

Figure 4

1: RECEIVE HTTP REQUESTS FROM UE; RECEIVE INDICATION OF MPL FROM UE; RECEIVE INDICATION FROM UE OF MPL START TIME FOR SET OF N HTTP REQUESTS; AND RECEIVE INDICATION OF LAST Nth HTTP REQUEST OF SET OF N HTTP REQUESTS

2: IS TIME LAPSED SINCE START TIME> MPL?

no

yes

3a: GIVE INCREASED SCHEDULING PRIORITY TO FORWARDING OF HTTP RESPONSES TO HTTP REQUESTS

3b: DO NOT GIVE INCREASED SCHEDULING PRIORITY TO FORWARDING OF HTTP RESPONSES TO HTTP REQUESTS

no

4: HAVE ALL N HTTP REQUESTS BEEN COMPLETED?

yes

5: END

Figure 5

18

```
┌─────────────────────────────────────────┐
│ 11: RECEIVE LATENCY VALUE FOR COMPLETED  │
│     PART OF DATA PULLING OPERATION       │
└─────────────────────────────────────────┘
                     │
                     ▼
┌─────────────────────────────────────────┐
│ 12: CONTROL SCHEDULING PRIORITY          │
│     FOR FORWARDING OF HTTP               │
│     RESPONSES FROM CONTENT SERVER        │
│     TO UE BASED ON LATENCY VALUE         │
└─────────────────────────────────────────┘
                     │
                     ▼
┌─────────────────────────────────────────┐
│ 13: FORWARD HTTP RESPONSES FROM          │
│     CONTENT SERVER TO UE                 │
└─────────────────────────────────────────┘
```

Figure 6

```
┌─────────────────────────────────────────┐
│ 21: RECEIVE INDICATION OF WHETHER        │
│ LATENCY FOR COMPLETED PART OF DATA       │
│     PULLING OPERATION < THRESHOLD        │
└─────────────────────────────────────────┘
                     │
                     ▼
┌─────────────────────────────────────────┐
│ 22: IS LATENCY FOR COMPLETED PART OF     │
│ DATA PULLING OPERATION < THRESHOLD       │
└─────────────────────────────────────────┘
              no              yes
        ┌──────────────────────────────┐
        ▼                              ▼
┌───────────────────────────┐  ┌───────────────────────────┐
│ 23a: INCREASE SCHEDULING   │  │ 23b: DECREASE SCHEDULING   │
│ PRIORITY FOR FORWARDING OF │  │ PRIORITY FOR FORWARDING OF │
│ HTTP RESPONSES FROM        │  │ HTTP RESPONSES FROM        │
│ CONTENT SERVER TO UE       │  │ CONTENT SERVER TO UE       │
└───────────────────────────┘  └───────────────────────────┘
                     │
                     ▼
┌─────────────────────────────────────────┐
│ 24: FORWARD HTTP RESPONSES FROM          │
│     CONTENT SERVER TO UE                 │
└─────────────────────────────────────────┘
```

Figure 7

Figure 8

900

914

913

912

911a

915

911b

Figure 9

1000

1006

1004

1002

1002

1010

1008

Figure 10

1102 1100a

1100b

1102

Figure 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018222996 A1
- US 20150271700 A1
- US 20180316740 A1